# FASCICULE DE BREVET EUROPEEN

(11) **EP 0 688 503 B1**
(45) Date de publication et mention de la délivrance du brevet: **29.12.1999**
(21) Numéro de dépôt: 94109681.0
(22) Date de dépôt: 23.06.1994
(51) Int. Cl.: A21D 13/08, A21D 2/26, A21D 10/00

(54) **Produit de boulangerie de type panettone**
Panettone-ähnliche Backware
Panettone type bakery product

(43) Date de publication de la demande: 27.12.1995
(73) Titulaire: SOCIETE DES PRODUITS NESTLE S.A., 1800 Vevey (CH)
(72) Inventeur: Banella, Francesco, I-06061 Castiglione Del Lago Perugia (IT); Gaugaz, Marlène, CH-1802 Corseaux (CH); Giorgetti, Paolo, I-06139 Pila Perugia (IT)
(74) Mandataire: Wavre, Claude-Alain

(56) Documents cités:
- DE-A- 3 105 821
- FR-A- 1 287 926
- FR-A- 2 584 895
- BYRON S. MILLER 'VARIETY BREADS IN THE UNITED STATES, Proceedings of a Symposium Presented at the AACC 65 th Annual Meeting September 21-25, 1980 Chicago, Illinois' 1981 , AMERICAN ASSOCIATION OF CEREAL CHEMISTS , ST. PAUL, MINNESOTA * page 132 "Panettone" *
- BAKER'S DIGEST, vol.56, no.6, 1982, PONTIAC, ILLINOIS US pages 12 - 15 DINO ZORZANELLO ET AL. 'THE TECHNOLOGY OF PANDORO PRODUCTION, ITALIAN CHRISTMAS CAKE'

## Description

La présente invention a pour objet une pâte de boulangerie de type panettone, le produit de boulangerie obtenu par la cuisson de cette pâte levée, et son utilisation pour la préparation d'un produit fourré d'une garniture salée ou sucrée.

Une pâte de panettone est préparée traditionnellement en deux étapes, la première consistant à mélanger une partie des ingrédients à un levain réactivé puis à fermenter ce mélange, et la deuxième consistant à mélanger le reste des ingrédients. Une telle pâte peut ainsi se composer d'un mélange de 6-10% de levain de panettone réactivé, 25-37% de farine de blé, 8-20% d'eau, 8-20% de sucres, 0-4% de sucre inverti, 3-13% de jaune d'oeuf, 7-13% de graisse animale ou végétale, 0-1% de lait écrémé en poudre, 0,5-1,5% de malt, 0,5-3,5% d'émulsifiants, et 0,1-1% de sel, par exemple (Brot und Backwaren, 3, p.68, 1989).

Cette pâte est alors soumise à une deuxième fermentation, puis elle est cuite pour donner un produit de boulangerie sucré du type viennoiserie, appelé panettone, présentant un goût de levain caractéristique, une texture aérée, tendre et élastique, et la propriété de ne pas rassir sous emballage pendant au moins 6 mois à température ambiante (Dictionnaire des industries alimentaires, J.M. Clement, 1978, Masson).

Cependant, une telle viennoiserie ne peut pas être facilement fourrée avec une garniture salée.

De même, la texture du panettone est aérée par de nombreuses alvéoles allongées dans une direction privilégiée, et présente ainsi une élasticité unidirectionnelle. Il serait cependant intéressant d'obtenir un panettone présentant une texture élastique dans toutes les directions.

En outre, la propriété de ne pas rassir du panettone dépend beaucoup de la composition de la pâte. Des modifications notables de sa composition, par exemple le fait de remplacer une grande partie de l'eau par du lait et de diminuer la teneur en sucre, sont susceptibles de perturber les deux fermentations traditionnelles de la pâte, et donner ainsi une viennoiserie ne présentant plus les propriétés décrites ci-dessus. En effet, le lait et le sucre, par exemple, sont connus pour être des facteurs limitants dans les fermentations traditionnelles.

De plus, il est également connu que le fait d'ajouter beaucoup de lait dans une pâte augmente la propriété de rassissement du produit de boulangerie qui en résulte (Tallinna Poluetehnilise Instituudi Toimetised, 383, 63-70, 1975). Ainsi, un panettone comprenant une proportion importante de lait est en toute probabilité susceptible de perdre sa propriété sous emballage de ne pas rassir pendant plusieurs mois à température ambiante.

Enfin, la pâte de panettone traditionnelle est relativement élastique et collante ce qui fait qu'on ne peut pas la façonner mais qu'on doit la déposer dans un moule de manière à ce qu'elle ne s'étale pas pendant la fermentation finale et la cuisson. Il serait cependant intéressant de pouvoir la façonner et donc la travailler dans une diviseuse-bouleuse traditionnelle.

La présente invention a pour but de proposer une pâte de boulangerie de type panettone contenant une quantité importante de lait et pouvant être façonnée, et un produit de boulangerie de type panettone contenant une quantité importante de lait, possédant une consistance tendre, une texture élastique, un goût neutre, et la propriété sous emballage de ne pas rassir pendant un temps prolongé à température ambiante ou à température réfrigérée.

A cet effet, la pâte de boulangerie de type panettone selon la présente invention, comprend un mélange de 25-37% de farine de blé, 7-13% de graisse animale ou végétale, 0,5-1,5% de malt, 0,5-3,5% d'émulsifiants, 0,1-1% de sel, 8-15% de jaune d'oeuf, 10-16% de levain, moins de 6% de sucres, au moins 10% de lait entier ou écrémé, et de l'eau jusqu'à une teneur en eau totale de ladite pâte de 15-25%.

Dans la suite de la description les pourcentages sont donnés en poids.

Par l'expression "pâte de boulangerie de type panettone", on entend une pâte qui résulte d'un procédé traditionnel de préparation d'une pâte de panettone et dont certains ingrédients sont présents dans une proportion traditionnelle, par exemple 25-37% de farine, 0-4% de sucres inverti, 7-13% de graisses, 0-1% de poudre de lait entier ou écrémé, 0,5-1,5% de malt, et 0,5-3,5% d'émulsifiants.

De même, par l'expression "produit de boulangerie de type panettone", on entend un produit de boulangerie qui résulte de la cuisson d'une pâte de type panettone préalablement levée pendant 6-10 heures à 28-32°C dans une atmosphère à 80-95% d'humidité relative, par exemple.

En outre, par l'expression "produit de boulangerie ayant la propriété de ne pas rassir", on entend le fait que la texture du produit emballé ne sèche pas ou ne durcit pas au cours du temps, du fait d'un réarrangement des molécules d'amidon du produit.

Enfin, par le terme "sucre inverti", on entend un mélange à parts égales de fructose et de glucose, qui présente un pouvoir humectant. Et par le terme "sucre", on comprend le glucose, le fructose et/ou le saccharose, par exemple.

Ainsi, selon la présente invention on a pu obtenir une pâte de type panettone qui est façonnable, c'est à dire qui peut être travaillée dans une diviseuse-bouleuse traditionnelle et être également déposée sur une plaque sans moule tout en gardant un développement uniforme durant la fermentation et la cuisson.

De plus, cette pâte préalablement levée puis cuite pendant 15-20 min à 160-200°C, par exemple, donne un produit de boulangerie, du genre pain ou petit pain, présentant une texture encore plus tendre que celle du panettone, une élasticité dans toutes les directions, un goût neutre en comparaison de celui du panettone ce qui permet de le fourrer avec des garnitures sucrées ou salées, et la propriété sous emballage de ne pas rassir pendant au moins 4 mois, à température ambiante ou à température réfrigérée, c'est à dire de l'ordre de 4 à 14°C.

Ainsi selon la présente invention, on prépare d'une manière traditionnelle une pâte de type panettone comprenant un mélange de 10-16% de levain, 8-15% de jaune d'oeuf, moins de 6% de sucres, au moins 10% de lait entier ou écrémé, et de l'eau jusqu'à une teneur en eau totale de ladite pâte de 15-25%, le reste des ingrédients pouvant alors varier dans des proportions traditionnelles sans pour autant influer sur les qualités recherchées de la pâte et du produit cuit.

En particulier, le levain a de préférence été réactivé d'une manière traditionnelle avant d'être utilisé pour la préparation d'une telle pâte. On peut réactiver ainsi un levain de panettone conservé à 4-12°C sous la forme d'un pâton comprenant de l'eau, de la farine et la flore active, en mélangeant une partie de ce levain avec deux parties de farine, puis en ajoutant de l'eau jusqu'à atteindre une teneur en eau totale de 35-40%. Le mélange ainsi réalisé peut être alors pétri pendant environ 3-7 min, puis être levé pendant environ 3-4 h, à 26-30°C et à 85-95% d'humidité relative. Le pâton ainsi obtenu peut être alors soumis à deux mélanges et fermentations successifs tels que décrit ci-dessus, par exemple. De préférence, on utilise un levain réactivé par trois mélanges et fermentations successifs.

La composition de la flore du levain est complexe. Il semble que 4 espèces jouent un rôle important dans la fermentation, à savoir *Saccharomyces cerevisiae*, *Saccharomyces exiguus*, *Lactobacillus brevis*, et *Lactobacillus sanfrancisci*. De préférence, la flore du levain comprend au moins 10 fois plus de microorganismes du genre *Lactobacillus* que de microorganismes du genre *Saccharomyces*.

La pâte de type panettone selon la présente invention est ensuite préparée selon un procédé traditionnel de préparation de pâte de panettone. Ce procédé peut consister ainsi à mélanger premièrement le levain réactivé avec toute l'eau, une partie de la farine, une partie du lait, une partie du sucre, une partie des graisses, une partie du jaune d'oeuf, et une partie des émulsifiants de la composition de la pâte selon la présente invention.

Ce premier mélange ou pâton, pétri pendant environ 8-12 min par exemple, peut ainsi comprendre tout le sucre, toute l'eau, 60-72% du lait, 60-80% de la farine, moins de 35% de la teneur en matière grasse, et moins de 35% du jaune d'oeuf de la pâte selon la présente invention. Les autres ingrédients peuvent varier dans des proportions traditionnelles. Ce pâton peut être finalement levé pendant 10-14 h, à 26-30°C et dans une atmosphère à 85-90% d'humidité relative, par exemple. Le volume du pâton peut alors augmenter de 3 à 3,5 fois par rapport à son volume initial.

Dans une deuxième étape de pétrissage, on peut ajouter le reste des ingrédients au pâton levé. De préférence, l'ordre d'addition des ingrédients est bien défini et leur température est supérieure à 20°C. Par exemple, on peut ajouter premièrement le reste de la farine, pétrir le tout pendant 3-7 min, puis ajouter le reste des ingrédients et pétrir le tout pendant 3-7 min. On obtient ainsi une pâte ayant la composition de la pâte selon la présente invention.

En particulier, le lait entier ou écrémé utilisé comme ingrédient peut être un lait frais ou un lait reconstitué, c'est à dire une suspension aqueuse comprenant 7-12% de poudre de lait entier ou écrémé.

En outre, la pâte peut également comprendre 1-3% de lait en poudre entier ou écrémé, ajouté de préférence lors du deuxième pétrissage.

De même, la pâte selon la présente invention peut comprendre un agent humectant choisi parmi le sucre inverti et le sel, seul ou en combinaison, dans une quantité telle qu'elle confère au pain qui résulte de la cuisson une activité d'eau (Aw) équivalente à celle d'un produit de garniture. Ainsi, on peut combiner du sucre inverti à raison de 2-3% et du sel à raison de 0,5-1,5%, par exemple. De préférence, on peut combiner 2,2-2,5% de sucre inverti et 0,9-1% de sel pour obtenir une Aw de 0,9 à 10°C. La pâte peut donc comprendre, en outre, 1-3% de lait en poudre en combinaison avec un agent humectant choisi parmi le sucre inverti et le sel, seul ou en combinaison.

De même, on préfère ajouter une grande partie des graisses et du jaune d'oeuf seulement lors de la deuxième étape de préparation de cette pâte, pour éviter de trop perturber la première fermentation du mélange qui joue un rôle important sur la qualité de la pâte finale. Ces additions successives d'ingrédients, suivies par des pétrissages, permettent également le gonflement de l'amidon et du gluten qui entraîne l'imperméabilisation de la pâte. Ceci facilite le maintien à l'intérieur de la pâte du CO₂ produit par fermentation.

Enfin, la pâte de la présente invention peut être divisée en boules de 20-50 g, par exemple par une diviseuse-bouleuse traditionnelle. Les boules de pâte peuvent être ainsi déposées sur des plateaux métalliques sans moules, et mises à lever pendant 7-8 h à 28-32°C dans une atmosphère à 85-90% d'humidité relative, par exemple. Pendant cette phase les boules peuvent alors doubler de volume. On obtient ainsi finalement une pâte levée de type panettone.

Cette pâte levée peut alors être cuite dans un four pendant 15-20 min à 160-200°C, par exemple. On obtient ainsi un produit de boulangerie de type panettone.

Le produit de boulangerie selon la présente invention présente toutes les qualités décrites précédemment, en particulier une texture composée d'alvéoles sphériques petites à moyennes, fines et serrée, présentant des parois minces, et conférant au produit une élasticité dans toutes les directions.

De plus, ce produit de boulangerie peut être utilisé pour la préparation d'un produit fourré d'une garniture salée ou sucrée. De préférence, comme garniture sucrée on peut choisir la crème foisonnée décrite dans EP 93100249,7. On peut également utiliser comme garniture salée, du jambon et du fromage pouvant être sous forme de crème, seuls ou en combinaison.

Les exemples ci-après sont présentés à titre d'illustration de la pâte et du produit de boulangerie de type panettone selon la présente invention. Ces exemples sont précédés d'un test de détermination de l'Aw du produit de boulangerie selon la présente invention, d'un exemple comparatif de la pâte de la présente invention, ainsi que de deux tableaux décrivant respectivement l'aspect nutritionnel et la préparation des pâtes présentées dans les exemples 1, 2 et dans l'exemple comparatif.

### Test

L'activité d'eau est définie par le rapport entre la pression de vapeur partielle de l'eau à la surface d'un échantillon et la pression de vapeur de l'eau pure à la même température. On peut cependant déterminer indirectement l'Aw par la mesure de l'humidité relative d'équilibre atteinte dans une enceinte fermée à température constante.

Pour cela, un échantillon de 2-3 g de produit de boulangerie est enfermé dans un récipient étanche placé dans une chambre thermostatisée à 10°C (Novasina, Suisse). L'espace vide autour de cet échantillon atteint à l'équilibre, au bout de 30-60 min, la même valeur Aw que l'échantillon. Le capteur électronique, monté dans le couvercle de fermeture du récipient, mesure alors l'humidité de cet espace vide par l'intermédiaire d'une résistance électrolytique.

### Exemple comparatif

On prépare une pâte de panettone traditionnelle de la manière décrite dans le tableau 2 ci-après. On ajoute à cette pâte des raisins secs et des fruits confits à raison de 21 parties pour 79 parties de pâte, puis on fait lever la pâte et on la cuit d'une manière classique.

Le panettone obtenu présente un arôme de levain fruité caractéristique, un goût sucré, une texture élastique dans un plan perpendiculaire à la direction de levée de la pâte, et une texture moins tendre que celle d'un produit de boulangerie de type panettone. Les alvéoles de la mie sont allongées, d'une taille longitudinale de 2-8 mm. Ces alvéoles sont moins serrées que celles d'un produit de type panettone selon la présente invention, et leurs parois sont également plus épaisses.

De plus, ce panettone se conserve à température ambiante sous emballage pendant au moins 6 mois sans rassir.

Enfin, l'aspect nutritionnel de ce panettone est décrit dans le tableau 1 ci-après.

**Tableau 1**

| Composition pour 100 g de produit de boulangerie | Exemple 1 | Exemple 2 | Exemple comparatif |
|---|---|---|---|
| Energie (kcal) | 408 | 406 | 393 |
| Protéines (g) | 7,3 | 8,0 | 6,8 |
| Protéines lactiques (g) | 1,0 | 1,2 | 0,4 |
| Lipides (g) | 20,4 | 20,0 | 16,8 |
| Hydrates de carbone (g) | 48,8 | 48,4 | 53,7 |
| Cendres (g) | 2,8 | 2,0 | 1,1 |
| Calcium (mg) | 64 | 75 | 43 |

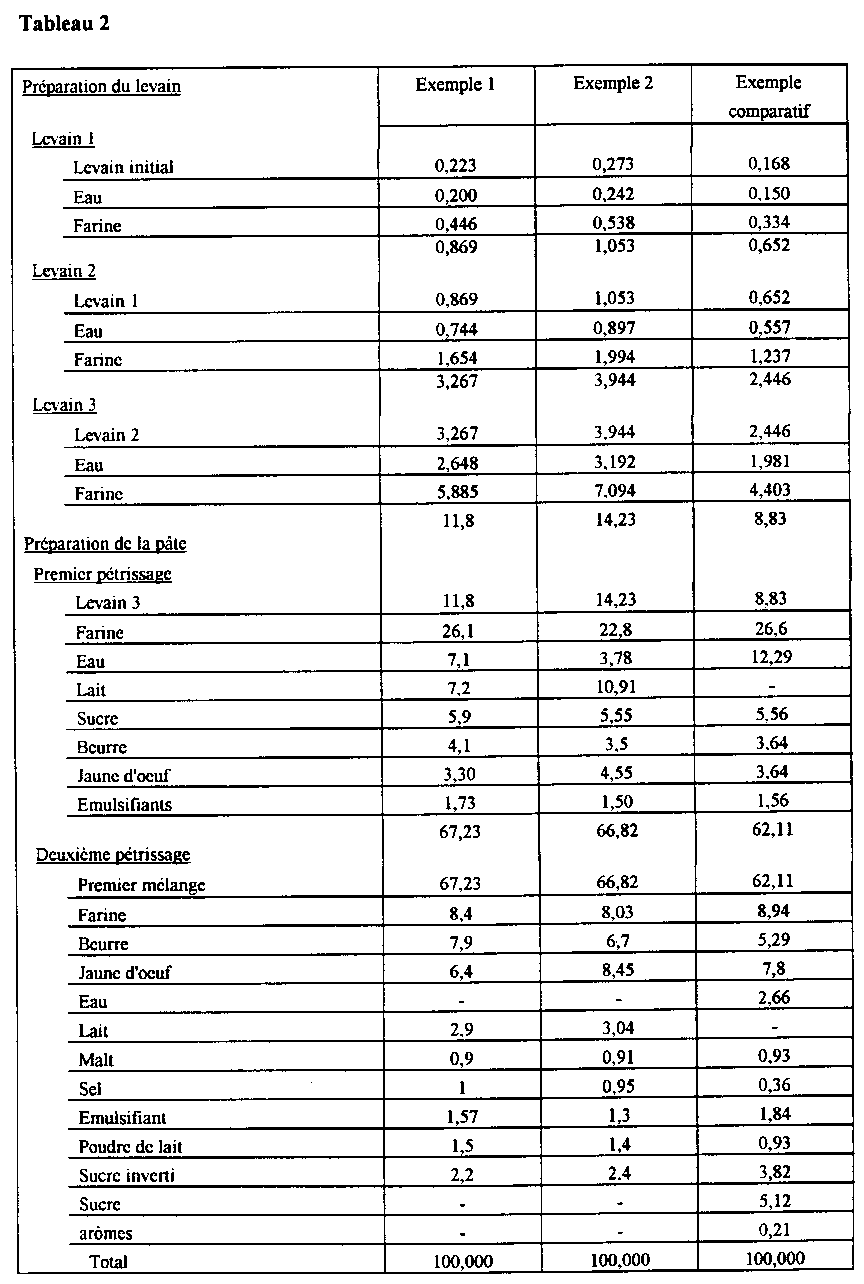

### Exemple 1

On prépare une pâte de type panettone comprenant un mélange de 11,8% de levain réactivé, 34,5% de farine de blé, 7,1% d'eau, 10,1% de lait, 9,7% de jaune d'oeuf, 3,3% d'émulsifiants, 12% de matière grasses, 5,9% de sucres, 1,5% de lait en poudre, 0,9% de malt, 2,2% de sucre inverti, 1% de sel. Les proportions des différents ingrédients sont décrites dans le tableau 2 ci-dessus, pour chaque étape de la préparation de la pâte.

Cette pâte est préparée d'une manière traditionnelle comme suit. Tout d'abord, le levain de panettone conservé à 10°C sous la forme d'un pâton est réactivé en mélangeant une partie avec deux parties de farine et en ajoutant de l'eau jusqu'à atteindre une teneur en eau totale de 40%. Le mélange est alors pétri pendant environ 5 min, puis est levé par fermentation pendant environ 3 heures 30 min à 28°C et à 90% d'humidité relative. Le pâton ainsi obtenu est alors soumis à deux mélanges et fermentations successifs identiques, comme décrit au tableau 2.

Dans un deuxième temps, on ajoute au pâton réactivé une partie des ingrédients comme décrit au tableau 2. On lève ensuite le mélange pendant 12 heures à 28°C, dans une atmosphère à 90% d'humidité relative. Le volume du pâton augmente d'environ 3,5 fois par rapport à son volume initial.

On mélange ensuite le reste des ingrédients au pâton, en ajoutant premièrement la farine et en pétrissant le tout environ 5 min, puis en ajoutant le reste des ingrédients et en pétrissant le tout pendant encore environ 5 min. On obtient ainsi une pâte ayant la composition décrite ci-dessus, qui est ensuite laissée reposer environ 15 min.

Cette pâte reposée est ensuite divisée en portions puis en boules de 25 g par une diviseuse-bouleuse de boulangerie traditionnelle. Ces boules sont ensuite simplement déposées sur une plaque métallique plane, puis mises à lever d'une manière traditionnelle. Les boules de pâte doublent de volume.

Les boules de pâte levées sont ensuite cuites à 185°C pendant 17 minutes. On obtient alors un produit de boulangerie de type panettone.

Ce produit de boulangerie de type panettone présente un goût neutre, c'est à dire à la fois sucré et salé pouvant ainsi se marier avec des garnitures salées ou sucrées. De plus, l'arôme de levain caractéristique est peu perceptible.

La texture est également très tendre. L'élasticité de la texture est présente dans toutes les directions. Enfin, les alvéoles de la mie sont relativement sphériques, d'un diamètre de 1-3 mm, elles sont également relativement serrées, et présentent des parois relativement fines.

Ce produit de boulangerie de type panettone se conserve également bien à température ambiante sous emballage pendant au moins 4 mois sans rassir.

Enfin, l'aspect nutritionnel de ce produit est décrit dans le tableau 1 ci-dessus.

### Exemple 2

On prépare une pâte de type panettone comprenant un mélange de 14,23% de levain, 30,8% de farine de blé, 3,8% d'eau, 13,95% de lait, 13% de jaune d'oeuf, 2,8% d'émulsifiants, 10,2% de matière grasse, 5,55% de sucre, 1,4% de lait en poudre, 0,91% de malt, 2,4% sucre inverti, et 0,95 de sel.

Pour ce faire, on prépare le levain, la pâte et le produit de boulangerie de type panettone de la même manière que celle décrite à l'exemple 1. Les quantités d'ingrédients ajoutées à chaque étape sont décrites au tableau 2 ci-dessus.

Le produit de boulangerie obtenu présente les mêmes caractéristiques que celles décrites dans l'exemple 1. L'aspect nutritionnel de ce produit est décrit au tableau 1 ci-dessus.

### Exemple 3

On fourre le produit de boulangerie de type panettone de l'exemple 1 d'une crème foisonnée sucrée décrite dans le brevet EP 93100249,7. Cette crème présente une Aw de 0,9 à 10°C.

### Exemple 4

On fourre le produit de boulangerie de type panettone de l'exemple 1 d'une mousse de viande traditionnelle.

### Exemple 5

On fourre le produit de boulangerie de type panettone de l'exemple 1 d'une crème de fromage traditionnelle.

## Revendications

1. Pâte de boulangerie de type panettone comprenant un mélange de 25-37% de farine de blé, 7-13% de graisse animale ou végétale, 0,5-1,5% de malt, 0,5-3,5% d'émulsifiants, 0,1-1% de sel, 10-16% de levain, 8-15% de jaune d'oeuf, moins de 6% de sucres, au moins 10% de lait entier ou écrémé, et de l'eau jusqu'à une teneur en eau totale de ladite pâte de 15-25%.

2. Pâte selon la revendication 1, caractérisée en ce que ledit lait entier ou écrémé est un lait reconstitué.

3. Pâte selon les revendications 1, caractérisée en ce qu'eue comprend en outre 1-3% de lait en poudre.

4. Pâte selon la revendication 3, caractérisée en ce qu'elle comprend un agent humectant choisi parmi le sucre inverti et le sel, seuls ou en combinaison, dans une quantité telle qu'elle confère au produit de boulangerie qui résulte de la cuisson de ladite pâte une activité d'eau équivalente à celle d'un produit de garniture.

5. Pâte selon la revendication 4, caractérisée en ce qu'elle comprend en combinaison 2-3% de sucre inverti et 0,5-1,5% de sel.

6. Pâte selon la revendication 5, caractérisée en ce qu'elle comprend en combinaison 2,2-2,5% de sucre inverti et 0,9-1% de sel pour obtenir une activité d'eau de 0,9 à 10°C.

7. Produit de boulangerie obtenu par la cuisson de la pâte préalablement levée selon l'une des revendications 1 à 6.

8. Utilisation du produit de boulangerie selon la revendication 7, pour la préparation d'un produit de boulangerie fourré d'une garniture salée ou sucrée.

## Claims

1. Panettone-type baker's dough comprising a mixture of 25-37 % wheat flour, 7-13 % animal or vegetable fats, 0.5-1.5 % malt, 0.5-3.5 % emulsifiers, 0.1-1 % salt, 10-16 % leaven, 8-15 % egg yolk, less than 6 % sugars, at least 10 % whole or skimmed milk, and water to a total water content for the said dough of 15-25 %.

2. Dough according to claim 1, characterized in that the said whole or skimmed milk is a reconstituted milk.

3. Dough according to claims 1, characterized in that it additionally includes 1-3 % milk powder.

4. Dough according to claim 3, characterized in that it includes a humectant agent chosen from invert sugar and salt, singly or in combination, in a quantity such that it provides the bakery product resulting from baking the said dough with a water activity equivalent to that of a filling product.

5. Dough according to claim 4, characterized in that it includes, in combination, 2-3 % invert sugar and 0.5-1.5 % salt.

6. Dough according to claim 5, characterized in that it includes, in combination, 2.2-2.5 % invert sugar and 0.9-1 % salt in order to obtain a water activity of 0.9 at 10°C.

7. Bakery product obtained by baking dough previously leavened according to one of claims 1 to 6.

8. Use of the bakery product according to claim 7 for preparing a bakery product filled with a salt or sweet filling.

## Patentansprüche

1. Teig für eine Backware vom Panettone-Typ, der eine Mischung aus 25 - 37% Weizenmehl, 7-13% tierischem oder pflanzlichem Fett, 0,5-1,5% Malz, 0,5-3,5% Emulgatoren, 0,1-1% Salz, 10-16% Hefe, 8-15% Eigelb, weniger als 6% an Zuckern, wenigstens 10% Vollmilch oder Magermilch, und Wasser bis zu einem Gesamtwassergehalt des Teigs von 15-25% umfaßt.

2. Teig nach Anspruch 1, dadurch gekennzeichnet, daß die Vollmilch oder Magermilch rekonstituierte Milch ist.

3. Teig nach Anspruch 1, dadurch gekennzeichnet, daß er außerdem 1-3% Milchpulver umfaßt.

4. Teig nach Anspruch 3, dadurch gekennzeichnet, daß er ein Feuchthaltemittel umfaßt, das ausgewählt ist aus Invertzucker und aus Salz, allein oder in Kombination, in einer Menge, die der Backware, die durch das Backen des Teigs entsteht, eine Wasseraktivität verleiht, die der eines Belagprodukts entspricht.

5. Teig nach Anspruch 4, dadurch gekennzeichnet, daß er in Kombination 2-3% Invertzucker und 0,5-1,5% Salz umfaßt.

6. Teig nach Anspruch 5, dadurch gekennzeichnet, daß er in Kombination 2,2-2,5% Invertzucker und 0,9-1% Salz umfaßt, um eine Wasseraktivität von 0,9 bei 10°C zu erhalten.

7. Backware, erhalten durch das Backen eines zuvor aufgegangenen Teigs nach einem der Ansprüche 1 bis 6.

8. Verwendung der Backware nach Anspruch 7 zur Herstellung einer Backware, die mit einem salzigen oder süßen Belag gefüllt ist.
